# EUROPÄISCHE PATENTSCHRIFT

(11) **EP 1 952 693 B1**
(45) Veröffentlichungstag und Bekanntmachung des Hinweises auf die Patenterteilung: **18.11.2009**
(21) Anmeldenummer: 08101018.3
(22) Anmeldetag: 28.01.2008
(51) Int. Cl.: A21C 9/04

(54) **Verfahren und Vorrichtung zum Dekorieren oder Belegen eines Horizontalabschnitts einer flachen Backware**
Method and device for decorating or coating a horizontal part of a flat bakery product
Procédé et dispositif de décoration ou de garniture d'une section horizontale d'un produit de boulangerie plat

(30) Priorität: 31.01.2007 DE 102007005735
(43) Veröffentlichungstag der Anmeldung: 06.08.2008
(73) Patentinhaber: Dr. August Oetker Nahrungsmittel KG, 33617 Bielefeld (DE)
(72) Erfinder: Dr. Spiegel, Udo, 33619, Bielefeld (DE)
(74) Vertreter: Taruttis, Stefan Georg

(56) Entgegenhaltungen:
- DE-A1- 2 640 983
- DE-B3-102005 034 510
- US-A- 5 523 101

## Beschreibung

Die Erfindung betrifft ein kontinuierliches Verfahren zum Dekorieren oder Belegen eines Horizontalabschnitts einer flachen Backware entlang einer Produktionslinie zur Herstellung der Backware mit den Schritten: a) Bereitstellen der flachen Backware an einer Station der Produktionslinie, b) Aufbringen mindestens einer Streukomponente auf den Horizontalabschnitt an einer folgenden Station der Produktionslinie und c) Aufbringen mindestens eines Stückes einer Stückkomponente auf den Horizontalabschnitt an einer folgenden Station der Produktionslinie.

### Stand der Technik

Die DE 10 2005 034 510 B3 beschreibt eine Vorrichtung zum Belegen einer einzelnen Pizza mit einer Mehrzahl von Belagskomponenten. Die Vorrichtung weist Vorratsbehälter in einer Matrixanordnung für Belagskomponenten auf, sowie einen verfahrbaren Träger für einen Pizzaboden, der jeweils unterhalb eines Vorratsbehälters positioniert werden kann. Zum gezielten Auftrag werden die Vorratsbehälter jeweils nacheinander geöffnet, um die Belagskomponente auf den unterhalb positionierten Träger aufzugeben.

US 5523101 offenbart eine Vorrichtung zum Dekorieren und Belegen einer Pizza in aufeinander folgenden Prozessschritten, wobei eine Schablone verhindert, dass der Rand der Pizza bestrent wird.

Aus der EP 0 947 137 B1 ist eine Vorrichtung zum Aufstreuen von Käse auf eine Pizza bekannt. Eine Waage stellt eine vorbestimmte Menge an geriebenem Käse bereit und leitet diese in einen ersten kegelstumpfförmigen Leitschacht, dessen Öffnung mit kleinerem Querschnitt nach unten zeigt. In diesem Leitschacht ist ein mit der Spitze nach oben gerichteter Kegel angeordnet, auf den ein Teil des Käses trifft, wodurch sich der Käse gleichmäßiger verteilt. Durch den kegelstumpfförmigen Leitschacht wird der Käse auf einen zweiten Kegel geleitet, der axial zu dem ersten angeordnet ist und dessen Spitze ebenfalls nach oben gerichtet ist, wodurch sich der Käse wiederum gleichmäßiger verteilt. Der Käse fällt dann durch einen zylindrischen Leitschacht auf einen Pizzaboden. Durch Einstellung der absoluten Höhenposition der Kegel wie auch der relativen Position der Kegel zueinander kann die Verteilung des Käses auf dem Pizzaboden beeinflusst werden, bspw. um mehr Käse am kreisförmigen Rand des Pizzabodens anzuordnen. Der auf diese Weise mit geriebenem Käse belegte Pizzaboden wird an folgenden Stationen mit weiteren Zutaten belegt, bspw. Gemüse- oder Obststücken.

Ein Nachteil der bekannten Vorrichtung und des zugehörigen Verfahrens zum Belegen des Pizzabodens ist, dass der Pizzaboden ungleichmäßig und willkürlich belegt scheint.

Ein weiterer Nachteil betrifft eine auf diese Weise hergestellte Tiefkühlpizza: Auf den geriebenen Käse aufgelegte, scheibenförmige Zutaten, bspw. Salami- oder Mozzarellascheiben, sind in einer Verpackung der Tiefkühlpizza frei beweglich. Öffnet ein Endverbraucher die Verpackung der Tiefkühlpizza, so fallen häufig die frei beweglichen Zutaten aus der Verpackung heraus und auf den Fußboden, was unerwünscht ist.

Ferner kann die Stückkomponente austrocknen, wenn sie nur auf der Streukomponente aufliegt. Liegt die Stückkomponente dagegen unter der Streukomponente, so ist sie für den Endverbraucher nicht oder nicht vollständig sichtbar.

### Aufgabe der Erfindung

Aufgabe der vorliegenden Erfindung ist es daher, ein Verfahren und eine Vorrichtung anzugeben, das bzw. die den optischen Eindruck derartiger Backwaren verbessern und bei dem bzw. der die lose Anordnung von Belagteilen vermieden wird.

### Allgemeine Beschreibung der Erfindung

Diese Aufgabe wird erfindungsgemäß bei einem kontinuierlichen Verfahren zum Dekorieren oder Belegen eines Horizontalabschnitts einer flachen Backware als Bestandteil einer Produktionslinie zur Herstellung der fertig belegten Backware mit den Schritten
a) Bereitstellen der flachen Backware auf einem Endlosförderer, z.B. an einer Aufgabestation einer Produktionslinie,
b) Aufbringen mindestens einer Streukomponente auf den Horizontalabschnitt an einer in Förderrichtung des Endlosförderers nachfolgenden Station der Produktionslinie und
c) Aufbringen mindestens eines Stücks einer Stückkomponente auf den Horizontalabschnitt an einer weiteren in Förderrichtung des Endlosförderers nachfolgenden Station der Produktionslinie durch die Schritte gelöst, die vorsehen:
d) Bilden mindestens einer Freifläche des Horizontalabschnitts, auf der keine Streukomponente aufliegt, im Schritt b), und
e) Anordnen mindestens eines Stückes einer Stückkomponente in der mindestens einen im Schritt d) erzeugten Freifläche.

Bevorzugt wird die Backware durch einen Pizzaboden, einen Kuchen, eine Baguettehälfte, eine Brötchenhälfte oder den Teigboden eines Flammkuchens gebildet.

Vorteilhaft ist der Horizontalabschnitt im wesentlichen die gesamte ebene obere Oberfläche der Backware.

Bevorzugt wird die Streukomponente durch geriebenen Käse, gefrorenes Hackfleisch, Obst- oder Gemüsestücke, Zucker oder Puderzucker gebildet und die Stückkomponente durch Salamischeiben, Ananasscheiben, Mozarellascheiben, Fleisch- oder Fischscheiben, Schokoladenstücke oder Marzipanstücke.

Vorteilhaft wird die Streukomponente kontinuierlich aufgetragen, z.B. im Wasserfallverfahren, und die Stückkomponente von Hand oder durch eine Abgabeeinrichtung gezielt in die mindestens eine Freifläche angeordnet. Als Wasserfallverfahren wird das Auftragen der Streukomponente durch kontinuierliches oder intermittierendes Abfördern der Streukomponente von einer Streueinrichtung über einen Bereich eines unterhalb der Streueinrichtung angeordneten Produktförderers bezeichnet. Das Abfördern kann an dem Ende der Streueinrichtung erfolgen, die z.B. ein Förderband sein kann, an dem es um eine Umlenkrolle geführt ist und einen Abwurfrand bildet.

In einer Variante können die Freiflächen mittels Abdeckkörpern oder einer Schablone gebildet werden, die im Fallweg der Streukomponente angeordnet ist, z.B. zwischen der Streueinrichtung und einer auf dem Produktförderer angeordneten Backware, z.B. einem Teigling. Vorzugsweise sind Abdeckkörper oder Schablone in ihrem Querschnitt senkrecht zum Endlosförderer bzw. vertikal, also in Fallrichtung der Streukomponente im wesentlichen konisch mit nach oben gerichteter Verjüngung, um das Ablagern von Streukomponente darauf zu minimieren.

In einer weiteren Variante wird die Streukomponente durch eine gesteuerte Zuführeinrichtung, bspw. ein Zuführrohr oder einen Streuer, bspw. Puderzuckerstreuer, gezielt auf ausgewählte Bereiche des Horizontalabschnitts aufgebracht, die nicht die Freiflächen bilden.

Bevorzugt wird in einer Freifläche ein Stück der Stückkomponente angeordnet, wobei die Form und Größe der Freifläche bevorzugt der Form und Größe darin abzulegender Stücke der Stückkomponente entspricht.

Alternativ können in einer Freifläche mehrere Stücke der Stückkomponente angeordnet werden.

In einer Variante wird in jeder Freifläche dieselbe Stückkomponente angeordnet.

Alternativ werden in mindestens zwei Freiflächen jeweils voneinander verschiedene Stückkomponenten angeordnet.

Vor dem Schritt b) kann eine Flüssigkeitskomponente auf den Horizontalabschnitt aufgetragen werden.

Vorteilhaft wird die Flüssigkeitskomponente durch eine Sauce, insbesondere Tomatensauce, oder ein Speiseöl gebildet, die bzw. das bevorzugt mit Gewürzen versehen ist, oder durch Schokoladen- oder Vanillesauce oder Sprühsahne gebildet.

Die Aufgabe wird erfindungsgemäß auch gelöst durch eine kontinuierlich zu betreibende Vorrichtung zur Durchführung des erfindungsgemäßen Verfahrens, die Bestandteil einer Produktionslinie zum Dekorieren oder Belegen eines Horizontalabschnitts einer flachen Backware sein kann, und einen kontinuierlich antreibbaren Endlosförderer zum Transport der Backwaren entlang der Produktionslinie aufweist, mindestens eine Station zum Aufbringen mindestens einer Streukomponente und mindestens eine in Förderrichtung des Endlosförderers nachfolgend angeordnete Station zum Aufbringen mindestens einer Stückkomponente, wobei die mindestens eine Station zum Aufbringen der mindestens einen Streukomponente eine Leiteinrichtung zum Erzeugen mindestens einer Freifläche aufweist, auf der der Horizontalabschnitt der Backware von Streukomponente freigehalten wird. Die Leiteinrichtung ist vorzugsweise eingerichtet, beim Aufbringen der Streukomponente mindestens eine Freifläche auf dem Horizontalabschnitt der Backware zu erzeugen. Weiter bevorzugt weist die Leiteinrichtung innerhalb eines Leitschachts mindestens einen Abdeckkörper oder eine Schablone mit Abdeckflächen mit Querschnitten auf, die den Flächenabschnitten der Backware entsprechen, auf denen die Freiflächen gebildet werden, die frei von Streukomponente gehalten sind.

Die mindestens eine Station zum Aufbringen der mindestens einen Stückkomponente weist vorzugsweise eine Abgabeeinrichtung für die gezielte Abgabe der Stückkomponente in die mindestens eine Freifläche auf.

Die Leiteinrichtung ist vorzugsweise über einen Abschnitt des Endlosförderers parallel zu diesem in einem Abstand, vorzugsweise mit gleicher Geschwindigkeit, verfahrbar ist und weist eine Austrittsöffnung mit einem Querschnitt maximal gleich des äußeren Umfangs der Backware auf, um zugeführte Streukomponente gezielt auf den Horizontalabschnitt der Oberfläche innerhalb des äußeren Umfangs der Backware zu leiten.

Bevorzugt ist die Leiteinrichtung eine gesteuerte Zuführeinrichtung, die die Streukomponente gezielt auf ausgewählte Bereiche des Horizontalabschnitts unter Bildung der mindestens einen Freifläche aufbringt.

Bevorzugt weist die Leiteinrichtung einen Leitschacht auf, dessen innerer Querschnitt einen Umfang aufweist, der maximal gleich dem äußeren Umfang der Oberfläche der Backware ist, auf die die Streukomponente aufgebracht werden soll. Der Leitschacht ist vorzugsweise so positionierbar, dass der von im aufgespannte Querschnitt, vorzugsweise seine untere Austrittsöffnung, im wesentlichen parallel zur Oberfläche des Endlosförderers angeordnet ist.

Da die erfindungsgemäße Leiteinrichtung mit darin angeordnetem Abdeckkörper oder einer Schablone Freiflächen innerhalb der Streukomponente auf dem Horizontalabschnitt der Oberfläche der Backware erzeugen kann, ist es möglich, die Abgabeeinrichtung bzw. Station zum Aufbringen einer Stückkomponente in Förderrichtung des Endlosförderers vor der Leiteinrichtung anzuordnen. Denn die Positionierung der Stückkomponente innerhalb der späteren Freiflächen der Streukomponente auf die Oberfläche der Backware beeinflusst nicht das spätere Aufbringen der Streukomponente mittels der Leiteinrichtung oder die Abschirmung von Freiflächen vor Streukomponente durch Abdeckkörper oder eine Schablone innerhalb der Leiteinrichtung.

Die Leiteinrichtung weist vorzugsweise eine Positioniereinrichtung auf, mittels derer die Leiteinrichtung in einem Abstand und parallel zur Oberfläche des Endlosförderers verfahrbar ist. Die Leiteinrichtung ist mittels der Positioniereinrichtung vorzugsweise alternierend verfahrbar, z.B. in einer ersten Bewegung in Richtung der Bewegungsrichtung des Endlosförderers mit einer Geschwindigkeit gleich der Geschwindigkeit des Endlosförderers, und in einer zweiten Bewegung entgegen der Bewegungsrichtung des Endlosförderers in die Startposition der ersten Bewegung, vorzugsweise mit höherer Geschwindigkeit als die erste Bewegung. Auf diese Weise ist die Leiteinrichtung in der ersten Bewegung, besonders bevorzugt vertikal oberhalb der auf dem Endlosförderer angeordneten Backware positionierbar, sowie parallel und mit gleicher Geschwindigkeit positionsgenau mit der auf dem Endlosförderer angeordneten Backware verfahrbar, um durch den Leitschacht fallende Streukomponente zielgerichtet innerhalb des äußeren Umfangs der Oberfläche der Backware anzuordnen. Die zweite Bewegung, alternierend zur ersten Bewegung ausführbar, dient zur Rückführung der Leiteinrichtung in die Startposition der ersten Bewegung und daher kann die Positioniereinrichtung eingerichtet sein, die Leiteinrichtung in der zweiten Bewegung mit höherer Geschwindigkeit als in der ersten Bewegung zu bewegen.

Die Startposition der ersten Bewegung liegt in Bezug zur Produktförderrichtung des Endlosförderers vor deren Endposition, z.B. näher an der anfänglichen Umlenkrolle des Endlosförderers, während die Endposition der ersten Bewegung weiter in Richtung der Produktförderrichtung angeordnet ist, z.B. näher an dessen endständiger Umlenkrolle.

Vorzugsweise ist die Positioniereinrichtung eingerichtet, die Leiteinrichtung in der Startposition der ersten Bewegung von einer Position mit größerem Abstand vom Endlosförderer in eine Position näher am Endlosförderer zu bewegen und die erste Bewegung in geringerem Abstand zum Endlosförderer ablaufen zu lassen. In der Endposition der ersten Bewegung ist die Leiteinrichtung dann wieder in einen größeren Abstand zum Endlosförderer zu bewegen. Vorzugsweise ist die Positioniereinrichtung eingerichtete, die zweite Bewegung in einem größeren Abstand zum Endlosförderer ablaufen zu lassen. In dieser Ausführung können mehrere parallel zum Endlosförderer beabstandete Leiteinrichtungen vorhanden sein, die jeweils mittels einer zugeordneten Positioniereinrichtung mit dem Endlosförderer hintereinander und ausgerichtet zu nacheinander geförderten Backwaren verfahrbar sind.

Zur Positionierung der Leiteinrichtung in einem Abstand senkrecht oberhalb der auf dem Endlosförderer angeordneten Backware weist die Positioniereinrichtung vorzugsweise eine Detektionseinheit zur Detektion der Position und Bewegung der auf dem Endlosförderer angeordneten Backware auf, so dass die Positioniereinrichtung abhängig von Signalen der Detektionseinheit steuerbar mit der Bewegung der Backware auf dem Endlosförderer synchronisierbar ist. Als Detektionseinheit kann ein Lichttaster eingesetzt werden, der die Position von Backwaren auf der Fördereinrichtung optisch erfasst. Vorzugsweise ist eine Steuerung eingerichtet, eine Zuführeinrichtung für Streukomponente auf eine Streueinrichtung, den Endlos- oder Produktförderer zur Förderung der Backware, sowie die Positioniereinrichtung der Leiteinrichtung in Abhängigkeit von den Signalen einer Detektionseinheit zu steuern, die die Lage der Backware auf dem Produktförderer angeben. Als Alternative zur Detektionseinheit kann die Positioniereinrichtung eingerichtet sein, ein Signal für die Positionierung von Backwaren auf dem Endlosförderer von einer Aufgabestation zu empfangen, die die Backwaren, z.B. Teiglinge, auf den Endlosförderer aufgibt. Die Verbindung der Positioniereinrichtung, z.B. mittels einer Steuerung, mit der Detektionseinheit zum Empfang von deren Signalen oder zum Empfang von Signalen der Aufgabestation zur Positionierung von Backwaren auf dem Endlosförderer ermöglicht die Synchronisierung des translatorischen Verfahrens der Positioniereinrichtung in der ersten Bewegung mit der Bewegung der Backware. Vorzugsweise ist die Positioniereinrichtung eingerichtet, die erste Bewegung in derselben Geschwindigkeit ablaufen zu lassen wie die Geschwindigkeit des Endlosförderers, z.B. dadurch, dass die Positioniereinrichtung eingerichtet ist, ein Signal für die Geschwindigkeit des Endlosförderers zu empfangen und in Abhängigkeit davon die erste Bewegung zu steuern. Alternativ kann eine Steuerung vorgesehen sein, die die erste Bewegung in Abhängigkeit von einem Signal für die Geschwindigkeit des Endlosförderers steuert.

Bevorzugt ist der Endlosförderer ein umlaufendes Transportband, dessen Oberfläche zur Aufnahme der Backware besonders bevorzugt horizontal angeordnet ist.

Bevorzugt weist die mindestens eine Station zum Aufbringen mindestens einer Streukomponente eine Streueinrichtung auf, um die Streukomponente in einem Wasserfallverfahren aufzubringen. Ein solche Streueinrichtung kann ein kontinuierlich laufendes Förderband sein, an dessen einer Umlenkrolle die Streukomponente unter Schwerkrafteinfluss abgefördert wird. Vorzugsweise ist die Streueinrichtung eingestellt, die Streukomponente während der ersten Bewegung der Leiteinrichtung in diese zu fördern, z.B. in eine Aufnahmeöffnung, die mit der Leiteinrichtung verbunden ist. Auf diese Weise ist die Streueinrichtung angepasst und eingerichtet, die Streukomponente für eine zielgerichtete Anordnung auf die Backware während des Verfahrvorgangs der Leiteinrichtung in der ersten Bewegung in eine Eintrittsöffnung der Leiteinrichtung zu fördern. Diese Anpassung der Streueinrichtung an die Bewegung der Leiteinrichtung ermöglicht ein zielgerichtetes Aufbringen der Streukomponente auf die Backware, bevorzugt unter Erzeugung zumindest einer Freifläche auf der Backware, mit signifikanter Reduzierung oder ohne Bestreuung des Endlosförderers mit der Streukomponente außerhalb der Backware.

### Genaue Beschreibung der Erfindung

Die Erfindung wird nachfolgend anhand eines Ausführungsbeispiels unter Bezugnahme auf eine Zeichnung erläutert. Es zeigen:
Fig. 1 eine schematische Darstellung einer erfindungsgemäßen Vorrichtung zum Aufbringen einer Streukomponente auf einen Horizontalabschnitt eines Pizzabodens als Backware; und
Fig. 2a, 2b und 2c eine schematische Draufsicht auf einen Pizzaboden in verschiedenen Fertigungsstadien.

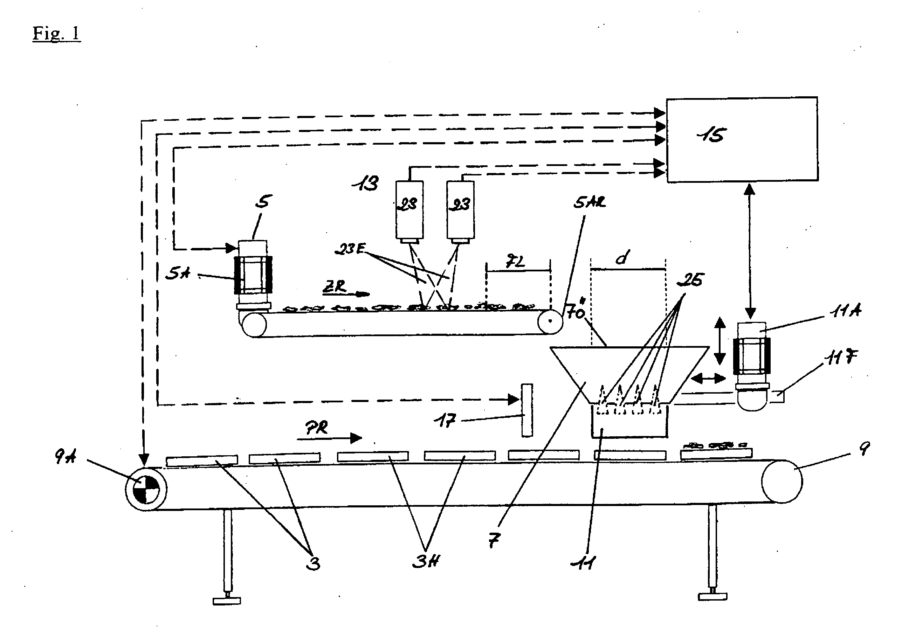

In Fig. 1 ist eine erfindungsgemäße Vorrichtung zum Aufstreuen einer Streukomponente 1 auf einen Horizontalabschnitt 3H einer flachen Backware 3 gezeigt, wobei diese eine Station einer Produktionslinie zur Herstellung von Tiefkühlpizzas ist. Die flache Backware 3 ist dementsprechend vorliegend ein kreisrunder Pizzaboden, und der Horizontalabschnitt 3H ist im wesentlichen die gesamte ebene obere Oberfläche des Pizzabodens.

Die in Fig. 1 gezeigte Vorrichtung umfaßt einen Produktförderer 9 in Form eines Förderbandes, auf dem flache Backwaren 3 entlang einer Produktförderrichtung PR kontinuierlich gefördert werden.

Der Produktförderer 9 weist einen Antrieb 9A auf, der von einer Steuerung 15 gesteuert wird.

Dem Produktförderer 9 ist mindestens ein Lichttaster 17 zugeordnet, der die Position von Backwaren 3 auf dem Produktförderer 9 erfasst, und der mit der Steuerung 15 verbunden ist.

Oberhalb des Produktförderers 9 ist in einem Abstand eine Zuführeinrichtung 5 in Form eines Förderbandes angeordnet, auf der die Streukomponente 1 entlang einer Zuführrichtung ZR intermittierend gefördert wird.

Die Zuführeinrichtung 5 weist einen Antrieb 5A auf, der ebenfalls von der Steuerung 15 gesteuert wird.

Die Streukomponente 1 wird während eines Abgabezyklus auf der Zuführeinrichtung 5 in Zuführrichtung ZR gefördert, bis diese über einen Abwurfrand 5AR der Zuführeinrichtung 5 abgegeben und auf die Backware 3 verteilt wird und die bevorzugte Variante des Wasserfallverfahrens ist. Die Streukomponente 1 wird während des Abgabezyklus kontinuierlich von der Zuführeinrichtung 5 gefördert. Vorzugsweise erfolgt die erste Bewegung des Leitschachts 11 einer Leiteinrichtung in einem Abstand etwa parallel zum Produktförderer 9 und positionsgenau über der Backware 3, um die erste Bewegung der Leiteinrichtung mit der Bewegung der Backware 3 während der Aufgabe der Streukomponente zu synchronisieren.

Die auf der Zuführeinrichtung 5 geförderte Streukomponente 1 ist im Beispiel geriebener Käse, der wahlweise bei 0°C bis 20°C oder in gefrorener Form vorliegen kann.

Die Masse von einzelnen Stücken der Streukomponente 1 wird vorteilhaft durch ein folgend beschriebenes, optisches Verfahren bestimmt, so dass die erfassbare Größe einzelner Stücke der Streukomponente 1 im wesentlichen nur durch die Auflösung von in dem optischen Verfahren verwendeten Kameras 23 beschränkt ist: Bei einer herkömmlichen linearen Auflösung einer in dem Verfahren verwendeten Kamera von beispielsweise 1024 Pixeln auf 250 mm erfasster Länge der Zuführeinrichtung 5 ergibt sich eine minimal erfassbare Fläche von Stücken der Streukomponente 1 zu 0,06 mm².

Bei dem optischen Verfahren zur Bestimmung der Masse von Stücken der Streukomponente 1 auf der Zuführeinrichtung 5 werden zwei oberhalb der Zuführeinrichtung 5 angeordnete Kameras 23 verwendet, die ebenfalls mit der Steuerung 15 verbunden sind und die deckungsgleiche Erfassungsbereiche 23E aufweisen, die zeitgleich erfaßt werden.

Mit Hilfe der Kameras 23 werden Bilder von Stücken der Streukomponente 1 aus zwei verschiedenen Richtungen erzeugt, in die Steuerung 15 geleitet und in der Steuerung 15 verwendet, um ein Volumen der einzelnen Stücke anhand der erstellten Bilder mittels einer Approximation, beispielsweise durch Ellipsoide, zu bestimmen. Entsprechend ist die Steuerung 15 eingerichtet, das Volumen von Stücken der Streukomponente auf Basis der von mindestens einer oberhalb der Fördereinrichtung angeordneten Kamera übermittelten Daten zu errechnen. Das auf diese Weise bestimmte Volumen einzelner Stücke der Streukomponente 1 wird durch die Einrichtung der Steuerung 15 mit der Dichte der Streukomponente 1 multipliziert, wodurch sich die Masse der Stücke der Streukomponente 1 ergibt. Alternativ kann die Steuerung 15 eingerichtet sein, anstelle des Volumens einzelner Stücke der Streukomponente ein über eine vorbestimmte Zeit integriertes mittleres Volumen je Zeiteinheit zu errechnen.

Da die Steuerung 15 mit dem Antrieb 5A der Zuführeinrichtung 5 verbunden ist und die Kameras 23 in einem festen Abstand von dem Abwurfrand 5AR der Zuführeinrichtung 5 angeordnet sind, sind der Steuerung 15 Daten übermittelbar, die die Lage der einzelnen Stücke der Streukomponente 1 auf der Zuführeinrichtung 5 relativ zu dem Abwurfrand 5A und deren Masse wiedergeben.

Soll in einem Abgabezyklus eine vorbestimmte Masse der Streukomponente 1 abgegeben werden, so addiert die Steuerung 15 ausgehend von dem Abwurfrand 5AR entgegen der Zuführrichtung ZR die Masse der auf der Zuführeinrichtung 5 angeordneten Stücke der Streukomponente 1 auf, bis eine gewünschte Masse erreicht ist. Die sich dabei ergebende Länge (Förderlänge FL) wird anschließend von der Zuführeinrichtung 5 abgefördert, indem die Steuerung 15 ein dementsprechendes Signal an den Antrieb 5A der Zuführeinrichtung 5 sendet, wodurch die vorbestimmte Masse der Streukomponente 1 abgegeben wird.

Die beiden Kameras 23 und die Steuerung 15 bilden daher eine Massenbestimmungseinrichtung 13, die die Masse von einzelnen Stücken der Streukomponente 1 auf der Zuführeinrichtung 5 bestimmt und deren Position auf der Zuführeinrichtung 5 erfaßt und wahlweise den Stücken ihre Position zuordnet. Das optische Verfahren zur Bestimmung der Masse von Stücken der Streukomponente 1 auf der Zuführeinrichtung 5 kann alternativ das in DE 10 2006 035 266.1 oder in EP 07113029.8 beschriebene Verfahren sein.

Zwischen dem Produktförderer 9 und der Zuführeinrichtung 5 ist ein Leitschacht 11 mit einem Aufnahmebereich 7 angeordnet.

Der Leitschacht 11 ist zylindrisch, wobei sein Durchmesser d dem Durchmesser der Backware 3 (den kreisförmigen Pizzaboden) entspricht. Alternativ kann der Durchmesser des kreisförmigen Leitschachts 11 kleiner als der Durchmesser der Backware 3 sein.

Der Aufnahmebereich 7 weist an seinem oberen Ende eine quadratische Aufnahmeöffnung 7ö auf, wobei die senkrecht zur Zuführrichtung ZR verlaufenden Seitenkanten der quadratischen Aufnahmeöffnung 7ö eine Länge aufweisen, die an die Breite der Zuführeinrichtung 5 in derselben Richtung angepasst ist, um die gesamte, von der Zuführeinrichtung 5 abgeförderte Streukomponente 1 mit der Aufnahmeöffnung 7ö aufzunehmen.

Die quadratische Aufnahmeöffnung 7ö verjüngt sich konisch nach unten und geht in den kreisförmigen Querschnitt des Leitschachts 11 über, dessen Austrittsöffnung beabstandet und parallel zum Produktförderer 9 angeordnet ist.

Dem Leitschacht 11 ist eine Horizontalführung 11F sowie ein Antrieb 11A, der mit der Steuerung 15 verbunden ist, zugeordnet, so dass der Leitschacht 11 in horizontaler Richtung entlang der Führung 11F parallel zur Produktförderrichtung PR in einer ersten Bewegung und einer zweiten entgegengesetzten Bewegung hin bzw. her verfahrbar ist, wie durch den horizontalen Doppelpfeil parallel zur Produktförderrichtung PR angedeutet ist.

Dem Leitschacht 11 ist ferner eine (nicht dargestellte) Vertikalführung mit entsprechendem, von der Steuerung 15 gesteuerten Antrieb zugeordnet, so dass der Leitschacht 11 auch vertikal hin und her verfahrbar ist, z.B. in Richtung auf den Produktförderer 9 zu Beginn der ersten Bewegung und in Richtung vom Produktförderer 9 zu Ende der ersten Bewegung.

Die beiden dem Leitschacht 11 zugeordneten horizontalen und vertikalen Antriebe sind von der Steuerung 15 derart gesteuert, dass zu Beginn eines Abgabezyklus der Leitschacht 11 aus der in Fig. 1 gezeigten Anfangsposition in Richtung auf die Backware 3 abgesenkt wird, in der das Abfördern der Streukomponente 1 von der Zuführeinrichtung 5 beginnt. Der Leitschacht 11 wird dann in Produktförderrichtung PR in Positionsübereinstimmung mit der Backware 3 als eine erste Bewegung verfahren. Vorzugsweise erfolgt die erste Bewegung des Leitschachts, bis die vorbestimmte Masse der Streukomponente 1 von der Zuführeinrichtung 5 abgefördert und auf der Backware 3 angeordnet ist, woraufhin der Leitschacht 11 dann von der Backware 3 in vertikaler Richtung in seine Endposition abgehoben und in einer zweiten Bewegung entgegen der Produktförderrichtung PR in seine Anfangsposition, z.B. die Startposition der ersten Bewegung, verfahren wird.

Der Leitschacht 11 und der Aufnahmebereich 7 stellen auf diese Weise sicher, dass die vorbestimmte Masse der Streukomponente 1 im wesentlichen nur auf dem Horizontalabschnitt 3H der Backware 3 angeordnet wird, und nicht beispielsweise auf den Produktförderer 9 fällt.

Die Steuerung 15 steuert die Antriebe 5A und 9A für die Zuführeinrichtung 5 bzw. den Produktförderer 9, sowie die Antriebe für den Leitschacht 11 in Abhängigkeit von den Signalen der Lichttaster 17, die die Lage der Backware 3 auf dem Produktförderer 9 angeben.

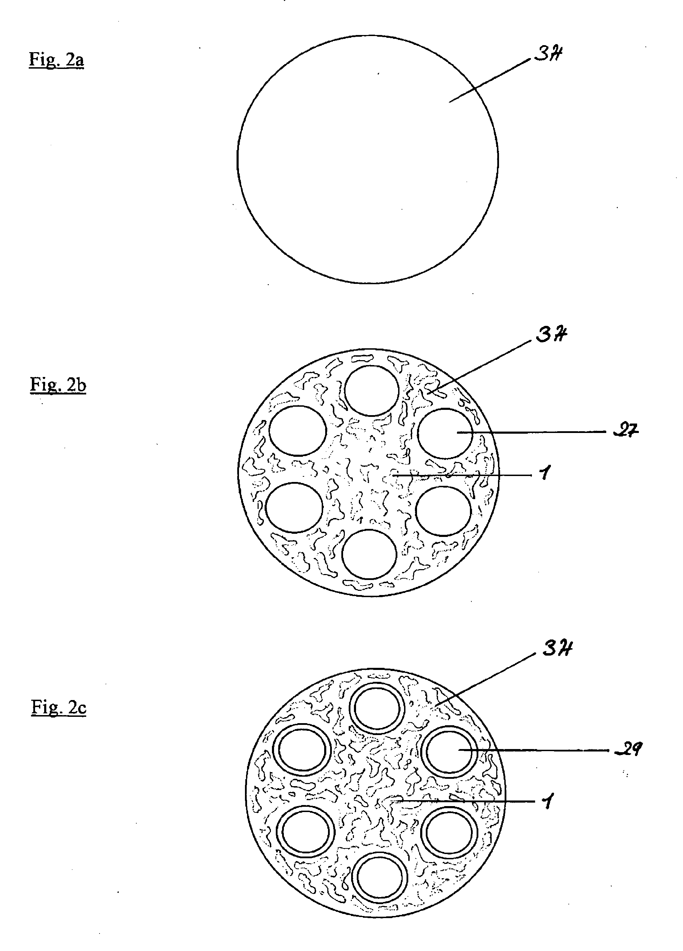

Zur Erzeugung von Freiflächen 27 auf dem Horizontalabschnitt 3H (s. Fig. 2b), die nicht mit der Streukomponente 1 belegt sind, können entsprechend geformte Abdeckkörper 25 in dem Leitschacht 5 angeordnet sein, vorliegend beispielsweise kegelförmige Abdeckkörper 25, deren Querschnitt parallel zur Oberfläche des Produktförderers 9 der gewünschten Freifläche entspricht. Trifft die Streukomponente 1 auf einen derartigen Abdeckkörper 25, so gleitet diese entlang desselben nach unten, so dass eine Freifläche 27 des Horizontalabschnitts 3H entsteht, auf dem keine Streukomponente 1 aufliegt.

In den Figuren 2a, 2b und 2c sind Draufsichten auf den zu belegenden Horizontalabschnitt 3H in verschiedenen Herstellungsstadien gezeigt:
Fig. 2a zeigt eine Draufsicht des Horizontalabschnitts 3H des Pizzabodens 3, auf den die Streukomponente 1 noch nicht aufgestreut ist, d.h. einen Pizzaboden 3, wie er vor dem Leitschacht 11 entgegen der Produktförderrichtung PR vorliegt. Auf diese Pizzaböden 3 ist bevorzugt eine Tomatensauce aufgebracht, die vorteilhaft verschiedene Gewürze aufweist, wobei das Aufbringen der Tomatensauce in einer dem Aufbringen der Streukomponente 1 vorgelagerten Station der Produktionslinie erfolgt.
Fig. 2b zeigt den mit der Streukomponente 1 belegten Horizontalabschnitt 3H, wobei durch die Abdeckkörper 25 sechs kreisförmige Freiflächen 27 gebildet sind, die nicht mit der Streukomponente 1 belegt sind.
Fig. 2c zeigt sechs Salamischeiben 29 (Stückkomponente 29), die jeweils in einer Freifläche 27 des Horizontalabschnitts 3H angeordnet sind. Die Salamischeiben 29 wurden in einer in Produktförderrichtung dem Aufbringen der Streukomponente 1 folgenden Station (nicht dargestellt) der Produktionslinie in den Freiflächen 27 angeordnet, vorliegend von Hand in die Freiflächen 27 gelegt. Alternativ können die Salamischeiben 29 automatisch in die Freiflächen 27 gelegt werden.

Durch das beschriebene Verfahren liegen die Salamischeiben 29 nicht mehr auf dem geriebenen Käse 1 auf, d.h. diesen Zutaten sind getrennte Bereiche des Horizontalabschnitts 3H zugeordnet. Die Salamischeiben 29 liegen dadurch direkt auf der Tomatensauce auf, wodurch sie an dieser haften und von einer Seite nicht austrocknen. Wird der Pizzaboden 3 zur Herstellung einer Tiefkühlpizza in einer folgenden Station der Produktionslinie gefroren, so "kleben" die Salamischeiben 29 an der Tomatensauce und somit an dem Pizzaboden, wodurch sie nicht mehr frei beweglich sind.

Als Abdeckkörper 25 wurden vorliegend Kegel verwendet. Alternativ können beliebige Körper verwendet werden, wobei diese bevorzugt einen konischen Verlauf aufweisen, damit die Streukomponente 1 nicht an deren Oberfläche haftet. Beispiele weiterer Körper sind Pyramiden mit einer quadratischen oder sechseckigen Grundfläche. Die Körper weisen ferner bevorzugt eine Anti-Haftbeschichtung auf, um ein Anhaften der Streukomponente 1 an diesen zu verhindern.

In einer alternativen Ausführungsform zu der Fig. 1 entfällt der Leitschacht 11 mit seinem Aufnahmebereich 7 und Abdeckkörpern 25, und statt dessen wird eine ebene Schablone mit dem Pizzaboden 3 verfahren, die an der Führung 11F befestigt ist. Die Schablone weist geeignete Ausnehmungen auf, um den Pizzaboden 3 wie gewünscht mit Käse zu bestreuen. Die Schablone weist bevorzugt ein geeignetes dreidimensionales Profil auf, um ein Anhaften der Streukomponente an derselben zu verhindern, vorzugsweise in Verbindung mit einer geeigneten Anti-Haftbeschichtung.

In einer weiteren alternativen Ausführungsform ist eine derartige Schablone anstelle der Abdeckkörper 25 in dem Leitschacht 11 der Fig. 1 angeordnet.

In einer weiteren alternativen Ausführungsform wird die Streukomponente 1 nicht in einem Wasserfallverfahren aufgestreut und durch Abdeckungsmittel (Abdeckkörper 25, Schablone) von bestimmten Bereichen des Horizontalabschnitts 3H ferngehalten, sondern durch eine gesteuerte Zuführeinrichtung gezielt auf bestimmte Bereiche des Horizontalabschnitts 3H abgegeben.

Ein Beispiel einer derartigen Zuführeinrichtung ist ein Puderzuckerstreuer, der automatisch über bestimmte Bereiche des Horizontalabschnitts 3H eines Kuchens (Backware 3) bewegt wird und dabei den Puderzucker ausschließlich auf diese Bereiche abgibt, wodurch Freiflächen 27 gebildet werden. In den gebildeten Freiflächen 27 können folgend bspw. Schokoladen- oder Marzipanstücke angeordnet werden, von Hand oder automatisch. Ein derartiger Streuer kann zum Aufbringen jeder Art von Streukomponente 1 verwendet werden, so bspw. auch zum Aufbringen von Käse, insbesondere Hartkäse, auf einen Pizzaboden.

Ein weiteres Beispiel für eine derartige Zuführeinrichtung ist eine Käseraspel, in die ein großes Stück Käse gesteckt wird, das dann über eine Raspel geraspelt und gleichzeitig gezielt auf den Pizzaboden gestreut wird.

Vorteilhaft können die Leiteinrichtungen, wie z.B. die Abdeckkörper 25 oder die Schablone, während des Betriebs von Stücken der Streukomponente 1 gereinigt werden, die an dieser haften, bspw. durch Vibration derselben, Ultraschall, Druckluft oder mittels Abstreifen durch bspw. eine Gummilippe.

In Fig. 2 sind die Freiflächen 27 zum Zwecke der Darstellung als exakt kreisrunde Flächen gezeigt. Im Betrieb der Anlage der Fig. 1 werden die Freiflächen 27 jedoch nicht eine derartig exakte Umrandung erzeugen. Die liegt bspw. in der Größe der Stücke der Streukomponente und dem Aufbringen derselben (Wasserfallverfahren) begründet. Die Freiflächen 27 können von der Größe her so gewählt werden, dass die Stückkomponente sich bequem darin anordnen läßt. Vorteilhaft ist die Größe der Freiflächen 27 jedoch so gewählt, dass die Stückkomponente 29 mindestens abschnittsweise auf der Streukomponente 1 aufliegt, bspw. entlang eines Umfangsrands.

### Bezugszeichenliste:

- 1: Streukomponente
- 3: Backware (bspw. Pizzaboden)
- 3H: Horizontalabschnitt der Backware
- 5: Zuführeinrichtung
- 5A: Antrieb der Zuführeinrichtung
- 5AR: Abwurfrand der Zuführeinrichtung
- 7: Aufnahmebereich
- 7ö: Aufnahmeöffnung
- 9: Produktförderer, Endlosförderer
- 9A: Antrieb des Produktförderers
- 11: Leitschacht
- 11F: Führung des Leitschachts (Horizontalführung)
- 11A: Antrieb des Leitschachts
- 13: Massenbestimmungseinrichtung
- 15: Steuerung
- 17: Lichttaster
- 23: Kamera
- 23E: Erfassungsbereich der Kamera
- 25: Abdeckkörper
- 27: Freifläche
- 29: Stückkomponente
- d: Durchmesser des Leitschachts 11
- FL: Förderlänge, auf der Abgabemasse angeordnet ist
- PR: Produktförderrichtung
- ZR: Zuführrichtung

## Patentansprüche

1. Kontinuierliches Verfahren zum Dekorieren oder Belegen eines Horizontalabschnitts (3H) einer flachen Backware (3) entlang einer Produktionslinie mit den Schritten:
a) Bereitstellen der flachen Backware (3) auf einem kontinuierlich antreibbaren Endlosförderer (9) an einer Station der Produktionslinie,
b) kontinuierliches Aufbringen mindestens einer Streukomponente (1) auf einen Horizontalabschnitt (3H) der Backware (3) und
c) Aufbringen mindestens eines Stücks einer Stückkomponente (29) auf den Horizontalabschnitt (3H),
**gekennzeichnet durch**
d) Bilden mindestens einer Freifläche (27), in der keine Streukomponente (1) aufliegt, innerhalb des Horizontalabschnitts (3H) während des kontinuierlichen Aufbringens der Streukomponente (1) im Schritt b), und
e) Anordnen mindestens eines Stücks der Stückkomponente (29) in die mindestens eine im Schritt d) erzeugte Freifläche (27).

2. Verfahren nach Anspruch 1, **dadurch gekennzeichnet, dass** die Streukomponente kontinuierlich oder intermittierend in einen Leitschacht (11) einer Leiteinrichtung gefördert wird, die in einer ersten Bewegung parallel zum Endlosförderer (9) in der Richtung und mit der Geschwindigkeit des Endlosförderers (9) verfahren wird und in einer zweiten Bewegung in die Startposition der ersten Bewegung verfahren wird.

3. Verfahren nach Anspruch 1 oder 2, **dadurch gekennzeichnet, dass** die Leiteinrichtung mindestens einen Abdeckkörper (25) mit konischem Querschnitt aufweist, dessen parallel zum Endlosförderer anordnbarer Querschnitt der Freifläche (27) entspricht.

4. Verfahren nach einem der vorangehenden Ansprüche, **dadurch gekennzeichnet, dass** die Masse der Streukomponente dosiert wird.

5. Verfahren nach einem der vorangehenden Ansprüche, **dadurch gekennzeichnet, dass** der Endlosförderer (9) intermittierend angetrieben wird.

6. Verfahren nach einem der vorangehenden Ansprüche, **dadurch gekennzeichnet, dass** der Horizontalabschnitt (3H) im wesentlichen die gesamte ebene obere Oberfläche der Backware (3) ist.

7. Verfahren nach einem der vorangehenden Ansprüche, **dadurch gekennzeichnet, dass** die Streukomponente (1) im Wasserfallverfahren aufgetragen wird und die Stückkomponente (29) von Hand oder durch eine Abgabeeinrichtung gezielt in der mindestens einen Freifläche (27) angeordnet wird.

8. Verfahren nach einem der vorangehenden Ansprüche, **dadurch gekennzeichnet, dass** in einer Freifläche (27) ein Stück der Stückkomponente (29) angeordnet wird und Form und Größe der Freifläche (27) gleich der Form und Größe des darin abzulegenden Stücks der Stückkomponente (29) ist.

9. Verfahren nach einem der Ansprüche 1 bis 8, **dadurch gekennzeichnet, dass** in einer Freifläche (27) mehrere Stücke der Stückkomponente (29) angeordnet werden.

10. Verfahren nach einem der vorangehenden Ansprüche, **dadurch gekennzeichnet, dass** in jeder Freifläche (27) dieselbe Stückkomponente (29) angeordnet wird.

11. Verfahren nach einem der Ansprüche 1 bis 9, **dadurch gekennzeichnet, dass** in mindestens zwei Freiflächen (27) jeweils voneinander verschiedene Stückkomponenten (29) angeordnet werden.

12. Verfahren nach einem der vorangehenden Ansprüche, **dadurch gekennzeichnet, dass** vor dem Schritt b) eine Flüssigkeitskomponente auf den Horizontalabschnitt (3H) aufgetragen wird.

13. Vorrichtung zur Durchführung eines Verfahrens nach einem der vorangehenden Ansprüche zum Dekorieren oder Belegen eines Horizontalabschnitts (3H) einer flachen Backware (3), wobei die Vorrichtung einen Endlosförderer (9) zum Transport der Backwaren (3), mindestens eine Station zum Aufbringen mindestens einer Streukomponente (1) und mindestens eine Station zum Aufbringen mindestens einer Stückkomponente (29) aufweist, **dadurch gekennzeichnet, dass** die mindestens eine Station zum Aufbringen der Streukomponente (1) eine Leiteinrichtung aufweist, die beim Aufbringen der Streukomponente (1) mindestens eine Freifläche (27) auf dem Horizontalabschnitt (3H) der Backware (3) erzeugt, und die mindestens eine Station zum Aufbringen der mindestens einen Stückkomponente (29) eine Abgabeeinrichtung zur gezielten Abgabe der Stückkomponente (29) in die mindestens eine Freifläche (27) aufweist.

14. Vorrichtung nach Anspruch 13, **dadurch gekennzeichnet, dass** die mindestens eine Station zum Aufbringen der mindestens einen Streukomponente (1) eine Leiteinrichtung mit einer Querschnittsfläche maximal gleich der Fläche aufweist, die vom äußeren Umfang der Backware (3) aufgespannt wird, und die Leiteinrichtung mittels einer Positioniereinrichtung in einer ersten Bewegung über einen Abschnitt des Endlosförderers (9) parallel beabstandet mit einer Geschwindigkeit gleich der Geschwindigkeit des Endlosförderers (9) verfahrbar ist.

15. Vorrichtung nach Anspruch 13 oder 14, **dadurch gekennzeichnet, dass** im Leitschacht (11) der Leiteinrichtung ein Abdeckkörper (25) oder eine Schablone angeordnet ist.

16. Vorrichtung nach einem der Ansprüche 13 bis 15, **dadurch gekennzeichnet, dass** die Leiteinrichtung eine Zuführeinrichtung für Streukomponente (1) aufweist.

17. Vorrichtung nach einem der Ansprüche 13 bis 16, **dadurch gekennzeichnet, dass** der Endlosförderer (9) ein umlaufendes Transportband ist.

18. Vorrichtung nach einem der Ansprüche 13 bis 17, **dadurch gekennzeichnet, dass** die mindestens eine Station zum Aufbringen mindestens einer Streukomponente (1) eine kontinuierlich oder intermittierend antreibbare Streueinrichtung aufweist, die eingerichtet ist, Streukomponente (1) in einem Wasserfallverfahren in eine Eintrittsöffnung der Leiteinrichtung zu bringen.

19. Vorrichtung nach einem der Ansprüche 13 bis 18, **dadurch gekennzeichnet, dass** die Leiteinrichtung (25) in einer zur ersten Bewegung alternierend ausführbaren zweiten Bewegung in die Startposition der ersten Bewegung verfahrbar ist.

20. Vorrichtung nach Anspruch 19, **dadurch gekennzeichnet, dass** die Leiteinrichtung (25) mittels der Positioniereinrichtung nach Durchlaufen der ersten Bewegung in einen größeren Abstand zum Endlosförderer (9) verfahrbar ist, die Vorrichtung eingerichtet ist, die zweite Bewegung in mindestens dem größeren Abstand auszuführen und zu Beginn der ersten Bewegung in einen geringeren Abstand zum Endlosförderer (9) verfahrbar ist.

## Claims

1. Continuous method of decorating or coating a horizontal portion. (3H) of a flat bakery product (3) along a production line, comprising the steps:
a) providing the flat bakery product (3) on a continuously drivable endless conveyor (9) at a station of the production line,
b) continuously applying at least one sprinkle component (1) on a horizontal portion (3H) of the bakery product (3) and
c) applying at least one piece of a piece component (29) on the horizontal portion (3H),
**characterised by**
d) forming at least one free area (27), in which no sprinkle component (1) rests, within the horizontal portion (3H) during the continuous application of the sprinkle component (1) in step b) and
e) arranging at least one piece of the piece component (29) in the at least one free area (27) generated in step d).

2. Method according to claim 1, **characterised in that** the sprinkle component is conveyed continuously or intermittently in a duct shaft (11) of a duct device, which is moved in a first movement parallel to the endless conveyor (9) in the direction and at the speed of the endless conveyor (9) and is moved in a second movement into the start position of the first movement.

3. Method according to claim 1 or 2, **characterised in that** the duct device has at least one cover body (25) with conical cross-section, the cross-section - which can be arranged parallel to the endless conveyor - of which corresponds with the free area (27).

4. Method according to any one of the preceding claims, **characterised in that** the sprinkle component mass is metered.

5. Method according to any one of the preceding claims, **characterised in that** the endless conveyor (9) is driven intermittently.

6. Method according to any one of the preceding claims, **characterised in that** the horizontal section (3H) is substantially the entire planar upper surface of the bakery product (3).

7. Method according to any one of the preceding claims, **characterised in that** the sprinkle component (1) is applied in the waterfall method and the piece component (29) is arranged by hand or by a delivery device selectively in the at least one free area (27).

8. Method according to any one of the preceding claims, **characterised in that** a piece of the piece component (29) is arranged in a free area (27) and the shape and size of the free area (27) are the same as the shape and size of the piece of the piece component (29) to be placed therein.

9. Method according to any one of claims 1 to 8, **characterised in that** several pieces of the piece component (29) are arranged in a free area (27).

10. Method according to any one of the preceding claims, **characterised in that** the same piece component (29) is arranged in each free area (27).

11. Method according to any one of claims 1 to 9, **characterised in that** piece components (29) differing from one another are arranged in at least two free areas (27).

12. Method according to any one of the preceding claims, **characterised in that** a liquid component is coated on the horizontal section (3H) before step b).

13. Device for carrying out a method according to any one of the preceding claims for decorating or coating a horizontal portion (3H) of a flat bakery product (3), wherein the device comprises an endless conveyor (9) for transport of the bakery products (3), at least one station for applying at least one sprinkle component (1) and at least one station for applying at least one piece component (29), **characterised in that** the at least one station for applying the sprinkle component (1) comprises a duct device which during application of the sprinkle component (1) generates at least one free area (27) on the horizontal portion (3H) of the bakery product (3), and the at least one station for applying the at least one piece component (29) comprises a delivery device for selective delivery of the piece component (29) in the at least one free area (27).

14. Device according to claim 13, **characterised in that** the at least one station for applying the at least one sprinkle component (1) comprises a duct device with a cross-sectional area at most equal to the area spanned by the outer circumference of the bakery product (3), and the duct device is movable by means of a positioning device in a first movement over a section of the endless conveyor (9) at a parallel spacing at a speed equal to the speed of the endless conveyor (9).

15. Device according to claim 13 or 14, **characterised in that** a cover body (25) or a template is arranged in the duct shaft (11) of the duct device.

16. Device according to any one of claims 13 to 15, **characterised in that** the duct device comprises a feed device for a sprinkle component (1).

17. Device according to any one of claims 13 to 16, **characterised in that** the endless conveyor (9) is a circulating transport belt.

18. Device according to any one of claims 13 to 17, **characterised in that** the at least one station for applying at least one sprinkle component (1) comprises a continuously or intermittently drivable sprinkle device which is equipped for bringing the sprinkle component (1) in a waterfall method into an inlet opening of the duct device.

19. Device according to any one of claims 13 to 18, **characterised in that** the duct device (25) is movable in a second movement, which can be performed in alternation with the first movement, into the starting position of the first movement.

20. Device according to claim 19, **characterised in that** the duct device (25) is movable, after performance of the first movement, by means of the positioning device into a greater spacing from the endless conveyor (9), and the device is equipped for executing the second movement at at least one greater spacing and is movable at the beginning of the first movement into a smaller spacing from the endless conveyor (9).

## Revendications

1. Procédé continu de décoration ou de garnissage d'une portion horizontale (3H) d'un produit de boulangerie plat (3), le long d'une ligne de production, comprenant les étapes consistant à :
a) apprêter ledit produit de boulangerie plat (3) sur un convoyeur sans fin (9) pouvant être entraîné en continu, dans un poste de la ligne de production,
b) déposer, en continu, au moins un ingrédient dispersé (1) sur une portion horizontale (3H) du produit de boulangerie (3), et
c) déposer au moins un fragment d'un ingrédient agrégé (29) sur ladite portion horizontale (3H),
**caractérisé par**
d) la formation à l'intérieur de la portion horizontale (3H), au cours du dépôt en continu de l'ingrédient dispersé (1) à l'étape b), d'au moins une surface dénudée (27) sur laquelle aucun ingrédient dispersé (1) ne se trouve, et
e) la mise en place, sur la surface dénudée (27) prévue au minimum et produite lors de l'étape d), d'au moins un fragment de l'ingrédient agrégé (29).

2. Procédé selon la revendication 1, **caractérisé par le fait que** l'ingrédient dispersé est charrié, en continu ou par intermittence, dans une goulotte directrice (11) d'un système de guidage qui, lors d'un premier mouvement, est déplacé parallèlement au convoyeur sans fin (9), dans la direction dudit convoyeur sans fin (9) et à la vitesse de celui-ci ; et qui, lors d'un second mouvement, est amené à l'emplacement de départ dudit premier mouvement.

3. Procédé selon la revendication 1 ou 2, **caractérisé par le fait que** le système de guidage présente au moins un corps de recouvrement (25) à section transversale tronconique dont la section transversale, pouvant être placée parallèlement au convoyeur sans fin, correspond à la surface dénudée (27).

4. Procédé selon l'une des revendications précédentes, **caractérisé par le fait que** la masse de l'ingrédient dispersé est dosée.

5. Procédé selon l'une des revendications précédentes, **caractérisé par le fait que** le convoyeur sans fin (9) est entraîné par intermittence.

6. Procédé selon l'une des revendications précédentes, **caractérisé par le fait que** la portion horizontale (3H) représente, pour l'essentiel, l'intégralité de la surface supérieure plane du produit de boulangerie (3).

7. Procédé selon l'une des revendications précédentes, **caractérisé par le fait que** l'ingrédient dispersé (1) est déposé par chute d'eau et l'ingrédient agrégé (29) est adéquatement mis en place, sur la surface dénudée (27) prévue au minimum, à la main ou par l'intermédiaire d'un système délivreur.

8. Procédé selon l'une des revendications précédentes, **caractérisé par le fait qu'**un fragment de l'ingrédient agrégé (29) est mis en place sur une surface dénudée (27), la forme et la taille de ladite surface dénudée (27) étant identiques à la forme et à la taille dudit fragment dudit ingrédient agrégé (29) qui doit y être déposé.

9. Procédé selon l'une des revendications 1 à 8, **caractérisé par le fait que** plusieurs fragments de l'ingrédient agrégé (29) sont mis en place sur une surface dénudée (27).

10. Procédé selon l'une des revendications précédentes, **caractérisé par le fait que** le même ingrédient agrégé (29) est mis en place sur chaque surface dénudée (27).

11. Procédé selon l'une des revendications 1 à 9, **caractérisé par le fait que** des ingrédients agrégés (29), mutuellement différents, sont respectivement mis en place sur au moins deux surfaces dénudées (27).

12. Procédé selon l'une des revendications précédentes, **caractérisé par le fait qu'**un ingrédient liquide est déposé sur la portion horizontale (3H) préalablement à l'étape b).

13. Dispositif pour la mise en oeuvre d'un procédé selon l'une des revendications précédentes, en vue de la décoration ou du garnissage d'une portion horizontale (3H) d'un produit de boulangerie plat (3), ledit dispositif comprenant un convoyeur sans fin (9) affecté au transport des produits de boulangerie (3) ; au moins un poste de dépôt d'au moins un ingrédient dispersé (1) ; et au moins un poste de dépôt d'au moins un ingrédient agrégé (29), **caractérisé par le fait que** le poste prévu au minimum, destiné au dépôt de l'ingrédient dispersé (1), comporte un système de guidage qui, lors du dépôt dudit ingrédient dispersé (1), engendre au moins une surface dénudée (27) sur la portion horizontale (3H) du produit de boulangerie (3) ; et le poste prévu au minimum, destiné au dépôt de l'ingrédient agrégé (29) prévu au minimum, comporte un système délivreur affecté à la délivrance ciblée dudit ingrédient agrégé (29) sur la surface dénudée (27) prévue au minimum.

14. Dispositif selon la revendication 13, **caractérisé par le fait que** le poste prévu au minimum, destiné au dépôt de l'ingrédient dispersé (1) prévu au minimum, présente un système de guidage offrant une superficie de section transversale égale, au maximum, à la superficie délimitée par le pourtour extérieur du produit de boulangerie (3) ; et ledit système de guidage peut être déplacé en un premier mouvement, au moyen d'un système de positionnement, sur un tronçon du convoyeur sans fin (9), parallèlement et à distance, à une vitesse identique à la vitesse dudit convoyeur sans fin (9).

15. Dispositif selon la revendication 13 ou 14, **caractérisé par le fait qu'**un corps de recouvrement (25), ou un gabarit, est logé dans la goulotte directrice (11) du système de guidage.

16. Dispositif selon l'une des revendications 13 à 15, **caractérisé par le fait que** le système de guidage présente un système d'amenée dédié à un ingrédient dispersé (1).

17. Dispositif selon l'une des revendications 13 à 16, **caractérisé par le fait que** le convoyeur sans fin (9) est une bande transporteuse en révolution.

18. Dispositif selon l'une des revendications 13 à 17, **caractérisé par le fait que** le poste prévu au minimum, destiné au dépôt d'au moins un ingrédient dispersé (1), comporte un système de commande qui peut être entraîné en continu ou par intermittence et est agencé pour faire pénétrer un ingrédient dispersé (1), par chute d'eau, dans un orifice d'entrée du système de guidage.

19. Dispositif selon l'une des revendications 13 à 18, **caractérisé par le fait que** le système de guidage (25) peut être amené à l'emplacement de départ du premier mouvement par un second mouvement pouvant être accompli en alternance avec ledit premier mouvement.

20. Dispositif selon la revendication 19, **caractérisé par le fait que** le système de guidage (25) peut être amené au moyen du système de positionnement, après avoir accompli le premier mouvement, à une distance plus grande vis-à-vis du convoyeur sans fin (9), ledit dispositif étant agencé pour effectuer le second mouvement à au moins ladite distance supérieure, et pouvant être amené, au début du premier mouvement, à une distance moindre vis-à-vis dudit convoyeur sans fin (9).
